# EUROPEAN PATENT APPLICATION

(11) **EP 1 602 302 A2**
(43) Date of publication of application: **07.12.2005**
(21) Application number: 05018879.6
(22) Date of filing: 21.09.2000
(51) Int. Cl.: A47C 7/74, H05B 3/20, B60N 2/56, H05B 3/34

(54) **Surface heating device**

(30) Priority: 22.09.1999 JP 26863799; 22.09.1999 JP 26863899
(62) Divisional of application: 00961153.4
(71) Applicant: MATSUSHITA ELECTRIC INDUSTRIAL CO., LTD., Kadoma-shi, Osaka 571-8501 (JP)
(72) Inventor: The designation of the inventor has not yet been filed
(74) Representative: Crawford, Andrew Birkby

(57) **Abstract**

A surface heating device comprising:
a supporter (2) being flexible; and
a heating element (3) comprising a conductor (4) and being disposed on said supporter, said heating element (3) comprising:
   a first heating element (3a) disposed in an outer region (6) of said supporter (2); and
   a second heating element (3b) disposed on an inner region (7) of said supporter coupled in parallel with said first heating element.

## Description

### Technical Field

The present invention relates to a surface heating device use in a seat or the like.

### Background Art

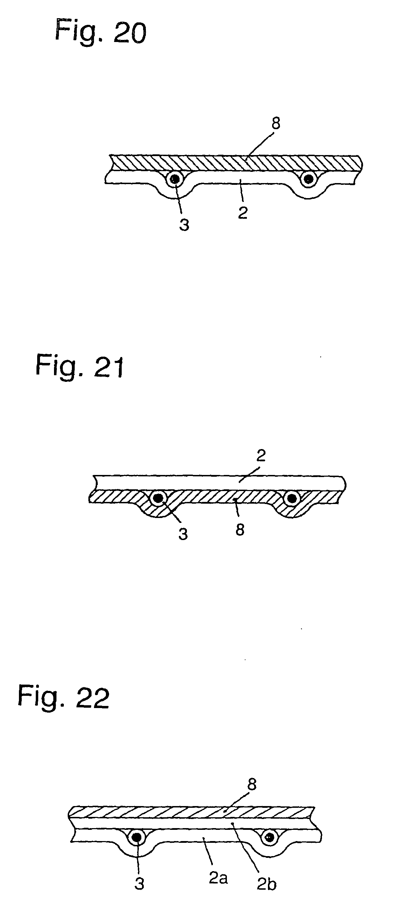

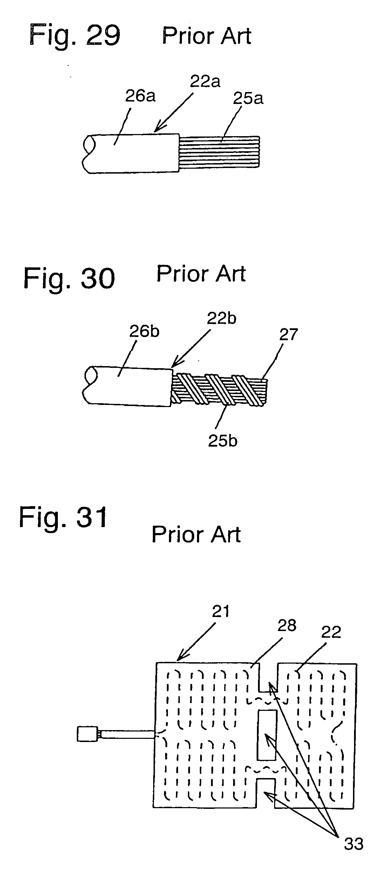

A conventional surface heating device 21 commonly includes a heating element disposed on a supporter 28 as shown in Fig. 31. The element is the following:
(a) A heating element 22a,as shown in Fig. 29, having a plurality of conductors 25a coated with an insulating coating 26a; or
(b) A heating element 22b, as disclosed in Japanese Utility Model Laid-open Publication 60-80690, where a conductor 25b is wound spirally on a synthetic fabric core 27 and coated with an insulating coat 26b as shown in Fig. 20 for an improved strength to a tension and a bending.

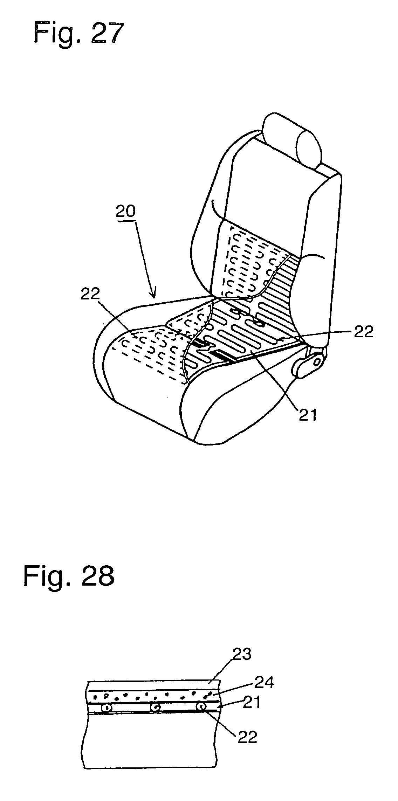

Fig. 27 illustrates the surface heating device 21 installed in a seat 20 for a vehicle. Even if a heating element 22 has a diameter of 0.5 to 1mm, the surface heating device 21 may make a driver or a passenger aware to an uncomfortable projection on a surface cover 23 when he/she is seated. It is hence desired to decrease the thickness or diameter of the heating element 22.

Fig. 28 is an enlarged cross sectional view of a region where the surface heating device 21 is installed in the seat 20 for a vehicle. In a conventional manner, a pad 24 provided under the surface cover 23 of the seat 20 needs to have a thickness of 20 to 30mm for preventing the heating element 22 from making him/her aware to the uncomfortable projection on the surface cover 23. The device 21 is provided beneath the pad 24.

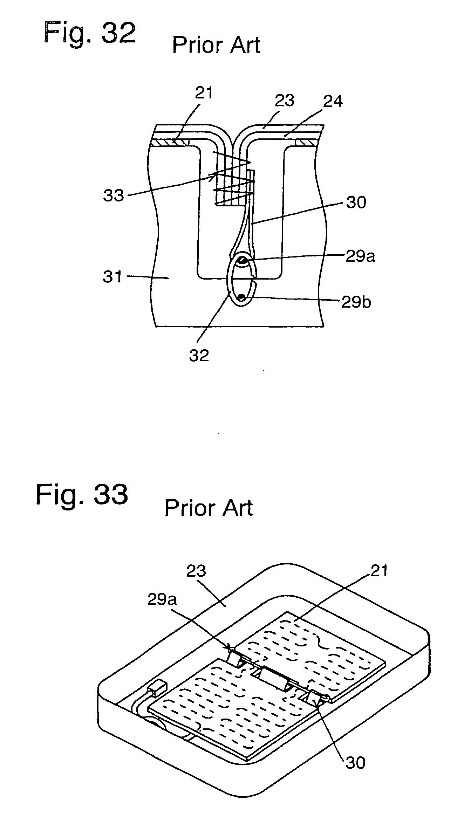

Fig. 32 is a cross sectional view of a region where the surface cover 23 of the seat 20 has a hanging section provided in the surface cover 23 of the seat 20. The hanging section is usually provided at the surface cover 23. The hanging section at the surface cover 23 includes a hanging strip 30 joined to the surface cover 23 and the pad 24 at a sewing portion 33. A hook ring 32 links a fitting 29a joined to the hanging strip 30 and a fitting 29b embedded in a main pad 31.

If the surface heating device 21 is placed under the surface cover 23 of the seat 20 and directly stitched together with the anchoring strip 30, the heating element 22 may be injured or cut by a stitching needle. For avoiding such a trouble, the surface heating device 21 has an opening 33, as shown in Fig. 31, through which the hanging strip 30 extends, and the heating element is protected from being stitched with the strip 30.

As a result, the pad 24 inhibits the surface heating device 21 from not being located directly under the surface cover 23 of the seat 20 and, as a heat insulator, prevents the surface cover 23 from being quickly heated. And therefore, heating up quickly the surface 23 of the seat 20 requires a large power consumption to the surface heating device 21. However, a capacity of a battery in the vehicle limits the heating speed.

As the conventional heating element 22, as shown in Fig. 29, has a conductor 25a coated with an insulating coat 26a for protecting the conductor from separating and for improving the protection strength. Due to the coat, when the heating element 22 is connected to the power supply, the insulating coat 26a has to be removed at the jointed portion of the element.

The heating element 22 in the surface heating device 21 installed in the vehicle seat 20 requires a small thickness or diameter. Furthermore, the heating element 22 is repeatedly stressed by a weight at the seating and thus needs a counter measure against being injured and disconnected.

### Disclosure of the Invention

A surface heating device is provided which includes a heating element fabricated by braiding plural conductors and a flexible supporter supporting the element thereon.

The heating element fabricated by braiding has a small thickness or diameter, thus being inhibited from giving a passenger an uncomfortable touch when he/she is seated and from projecting on the surface cover of a seat. Also, the device requires a pad having a reduced thickness and thus allows the surface cover of the seat to be heated up rapidly.

The heating element made from the braided conductors is strong against being bent with a weight of a seated passenger because a stress exerted on the element is dispersed on the conductors. Furthermore, the conductors are protected from separating from each other, and therefore, no insulating coat is necessary.

### Brief Description of the Drawings

Fig. 1 is a plan view of a surface heating device according to Embodiment 1 of the present invention.
Fig. 2 is an enlarged view of a heating element according to Embodiment 1 of the present invention.
Fig. 3 is an enlarged view of the heating element according to Embodiment 1 of the present invention.
Fig. 4 is an enlarged view of a heating element according to Embodiment 2 of the present invention.
Fig. 5 is an enlarged view of the heating element according to Embodiment 2 of the present invention.
Fig. 6 is an enlarged view of a heating element according to Embodiment 3 of the present invention.
Fig. 7 is an enlarged view of the heating element according to Embodiment 3 of the present invention.
Fig. 8 is an enlarged view of a heating element according to Embodiment 4 of the present invention.
Fig. 9 is an enlarged view of the heating element according to Embodiment 4 of the present invention.
Fig. 10 is a plan view of a surface heating device according to Embodiment 5 of the present invention.
Fig. 11 is an enlarged cross sectional view of an hanging section according to Embodiment 5 of the present invention.
Fig. 12 is an enlarged view of a heating element according to Embodiment 6 of the present invention.
Fig. 13 is an enlarged view of the heating element according to Embodiment 6 of the present invention.
Fig. 14 is an enlarged view of a heating element according to Embodiment 7 of the present invention.
Fig. 15 is a plan view of a surface heating device according to Embodiment 8 of the present invention.
Fig. 16 is a plan view of a surface heating device according to Embodiment 9 of the present invention.
Fig. 17 is a plan view of a surface heating device according to Embodiment 9 of the present invention.
Fig. 18 is an enlarged cross sectional view of a surface heating device according to Embodiment 10 of the present invention.
Fig. 19 is an enlarged cross sectional view of the surface heating device according to Embodiment 10 of the present invention.
Fig. 20 is an enlarged cross sectional view of the surface heating device according to Embodiment 10 of the present invention.
Fig. 21 is an enlarged cross sectional view of the surface heating device according to Embodiment 10 of the present invention.
Fig. 22 is an enlarged cross sectional view of the surface heating device according to Embodiment 10 of the present invention.
Fig. 23 is an enlarged view of a conductor according to Embodiment 11 of the present invention.
Fig. 24 is an enlarged view of a heating element according to Embodiment 11 of the present invention.
Fig. 25 is an enlarged view of a heating element according to Embodiment 12 of the present invention.
Fig. 26 is an enlarged view of the heating element according to Embodiment 12 of the present invention.
Fig. 27 is a perspective view of seat for a vehicle.
Fig. 28 is an enlarged cross sectional view of the seat of a vehicle.
Fig. 29 is an enlarged view of a conventional heating element.
Fig. 30 is an enlarged view of a conventional heating element.
Fig. 31 is a plan view of a conventional surface heating device.
Fig. 32 shows the conventional surface heating device installed on a vehicle seat.
Fig. 33 is a perspective view showing the conventional surface heating device installed at a surface cover of a seat of a vehicle.

### Best Modes for embodying the Invention

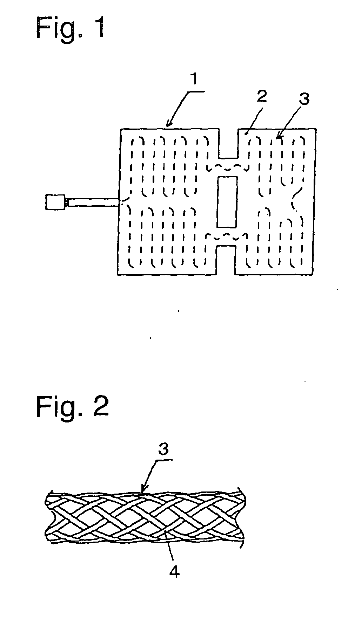

Some embodiments of the present invention will be described referring to Fig. 1 through Fig. 26.

### (Embodiment 1)

Fig. 1 is a plan view of a surface heating device 1 installed on a seat 20 for a vehicle where a heating element 3 is disposed on a flexible supporter 2. Fig. 2 is an enlarged view of the heating element 3 formed by braiding plural conductors 4.

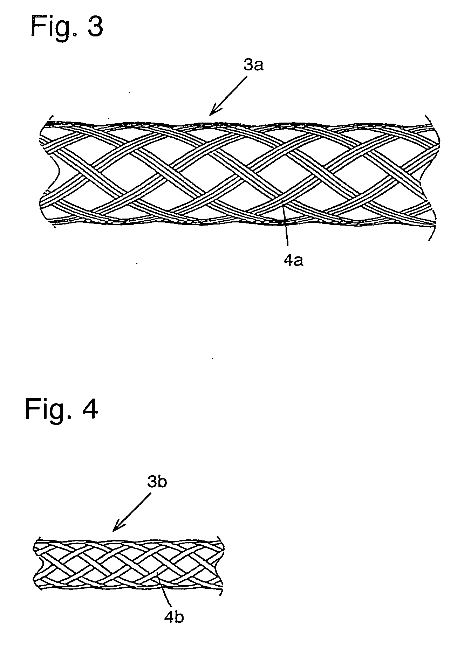

A heating element 3a shown in Fig. 3 is formed by braiding plural stranded conductors 4c. The heating element 3a is more flexible than the element formed with the single-line conductors 4 shown in Fig. 2.

The element including the braided conductors 4 exhibits a greater strength against a stress exerted by the weight of a seated person because the stress to the conductors is dispersed.

Also, the conductors 4 are inhibited from separating, and thus, an insulating coat, which is essential in the prior art, is eliminated. This allows the heating element 3 to be directly soldered and applied to a solder-less jointing such as spot welding.

The number of the conductors 4 or the braiding pitch is changed, so that a desired resistance per unit length (Ω/m) of the heating element 3 may be determined.

### (Embodiment 2)

Fig. 4 is an enlarged view of a heating element 3b where plural conductors 4b of a single type are braided. The resistance per unit length (Ω/m) of the heating element 3b is determined to a desired value by simply changing the number of the conductors 4b.

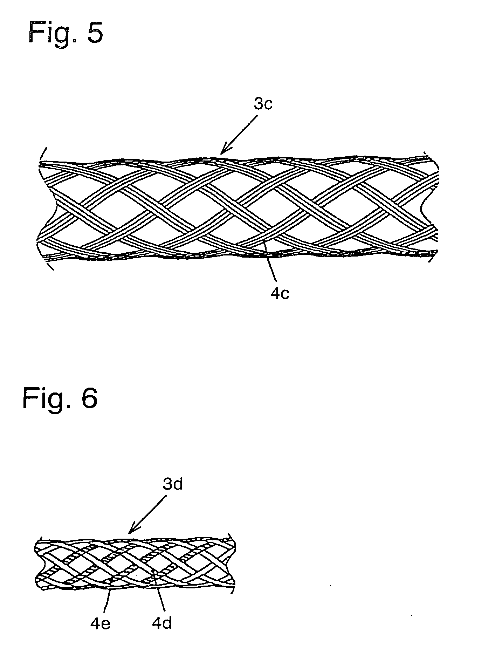

As shown in Fig. 5, a heating element 3c includes stranded conductors 4c. Each of the conductors 4c includes plural conductors of a single type. Similarly, the resistance per unit length (Ω/m) of the heating element 3c can be determined to a desired setting by simply changing the number of conductors in each conductors 4b.

### (Embodiment 3)

Fig. 6 is an enlarged view of a heating element 3d where plural conductors 4d of a single type and plural conductors 4e of another type denoted by the hatching. The resistance per unit length (Ω/m) of the heating element 3b can be determined to a desired setting by simply changing the number of the conductor in the conductors 4b and 4e or materials of the conductors, while the setting range is wider than that of the identical conductors 4b.

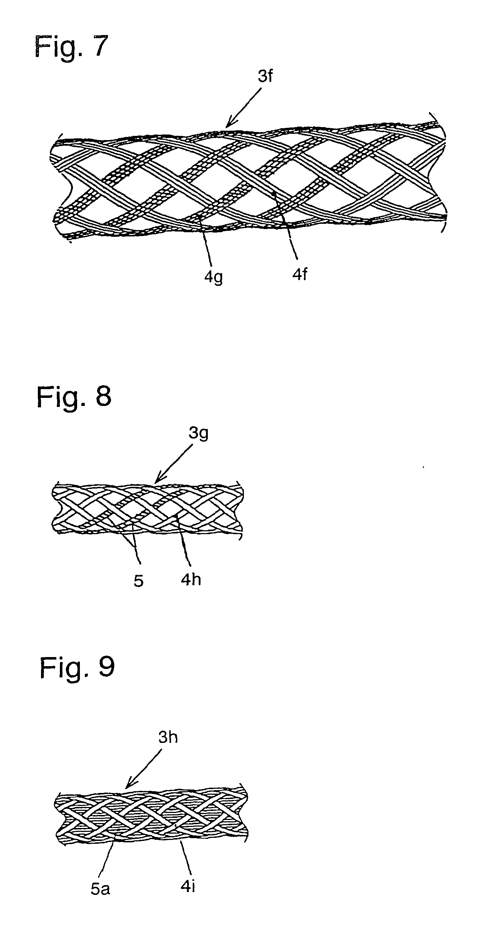

Fig. 7 is an enlarged view of a heating element 3f where groups of conductors 4f of a single type and groups of conductors 4g of another type denoted by the hatching are braided. The resistance per unit length (Ω/m) of the conductors 4b of a single type is set easier than that of an identical conductor 4b. Also, the setting range of the resistance per unit length (Ω/m) increases.

### (Embodiment 4)

Fig. 8 is an enlarged view of a heating element 3g where plural conductors 4h are braided with a core line 5 denoted by the hatching. The core line 5 may be a steel wire such as a piano steel or stainless steel wire for increasing the strength for tension or bending to the heating element 3g.

Fig. 9 is an enlarged view of a heating element 3h where plural conductors 4i are braided on and about a group of core wires 5a. The core wires 5a increases the strength for tension and bending to the heating element 3h and improves the flexibility. The core wires 5a may preferably be a stranded fiber of a aromatic polyamide fiber, polyester fiber, or a carbon fiber.

### (Embodiment 5)

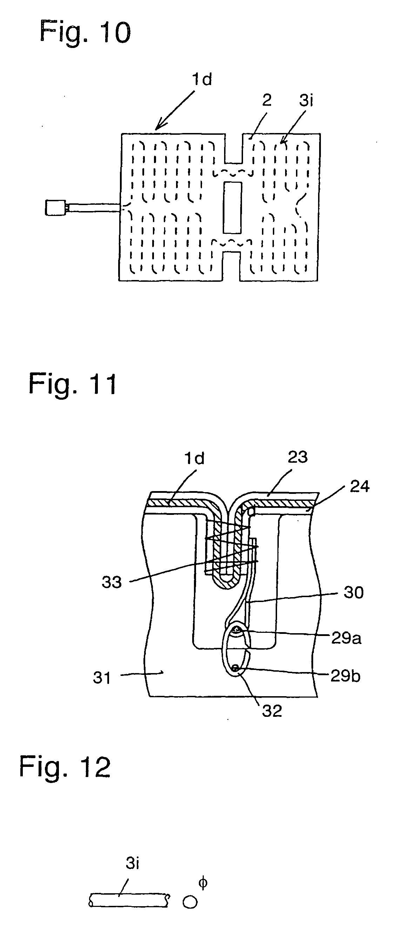

Fig. 10 is a plan view of a surface heating device 1d installed in a seat 20 of a vehicle where a heating element 3i is disposed on a flexible supporter 2. The heating element 3i is a conductor reinforced with a metal fiber. The resistance of the heating element 3i is set to a desired one by using a silver alloy wire as the conductor. The heating element 3i of the surface heating device 1d installed in the seat 20 may preferably ranges from 0.02 to 0.50mm in diameter and contain 3 to 10wt% of silver.

The conductor reinforced with a metal fiber may be a silver contained copper alloy is fabricated with the following method. A solid solution of crystallized copper and a metal casting alloy of an eutectic form is fabricated by fusing and rapidly cooling a mixture of copper and silver. The alloy is subjected to alternate hot and cool processes where the metal casting alloy is separated. The alloy is protended to have a composite fiber structure of the copper solid solution and the copper/silver eutectic form. As a result, the fiber is ten times stronger for tension and bending than that of the prior art, hence being permitted to stitch with a sewing machine. Referring to Fig. 11, the surface heating device 1d provided beneath the surface cover 23 of the seat 20 can be stitched together with a pad 24 to join to a hanging strip 30.

### (Embodiment 6)

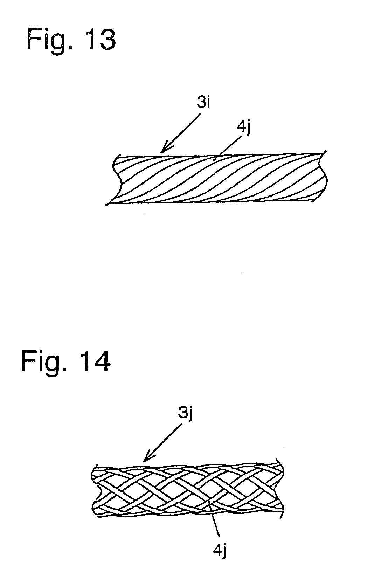

Fig. 12 illustrates the heating element 3i implemented by a single wire made of silver contained copper alloy as the fiber reinforced with a metal. Fig. 13 shows another modification of the heating element 3i where plural wires 4j made of silver contained copper alloy as the fiber are stranded.

The resistance per unit length (Ω/m) of the heating element 3I shown in Fig. 12 is set to a desired one by just changing the diameter and the content of silver. In the modification shown in Fig. 13, the resistance per unit length (Ω/m) of the heating element 3i is set to a desired one by just changing the number of the alloy wires 4j.

### (Embodiment 7)

Fig. 14 is an enlarged view of a heating element 3j where plural silver contained copper alloy wires 4j as the fiber reinforced with metal are braided. This allows the copper alloy wires 4j to be prevented from being separated and to omit no insulating coat covering the wires. Also, as the stress exerted on the copper alloy wires 4j is favorably dispersed, the heating element 3j is increased in the bending strength.

Moreover, as the copper alloy wires 4j are stranded but not fixed to each other, thus being easily movable. Even when assaulted by a stitching needle, the copper alloy wires 4j easily escapes from the needle, thus being hardly bitten with the needle. Consequently as shown in Fig. 11, the surface heating device 1d provided beneath the surface cover 23 of a seat 20 can be stitched together with a pad 24 and a hanging strip 30. Also, the heating element 3j of which parts disposed at an inner region and an outer region are connected in parallel can employ a heating element having the high resistance per unit length (Ω/m). This permits the copper alloy wires 4j to be favorably reduced in the diameter and the number of the conductors, hence reducing the difference in the resistance between the copper alloy wires 4j.

### (Embodiment 8)

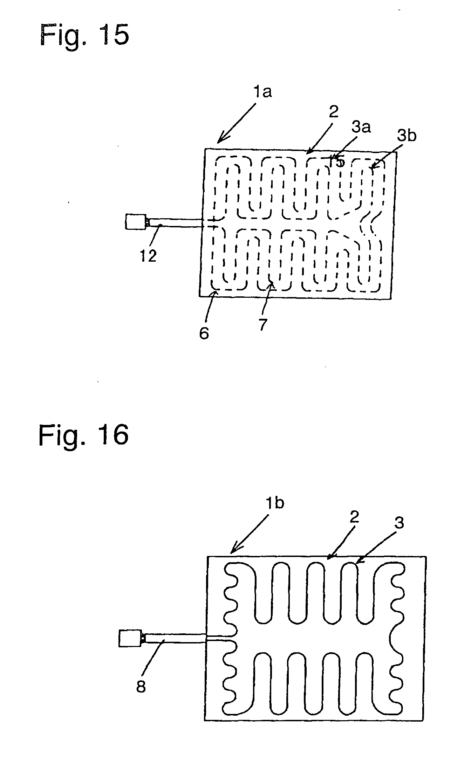

Fig. 15 is a plan view of a surface heating device 1a. Heating elements 3a and 3b are provided on a supporter 2. The heating element 3a extends in an outer region 6 of the supporter 2 and the other heating element 3b extends in an inner region 7 of the supporter. The two heating elements 3a and 3b disposed respectively in regions 6 and 7 are connected to each other and joined to a single power supply 12. Since the two heating element members 3a and 3b are connected in parallel, the overall resistance on the surface heating device 1a is reduced.

The greater the resistance per unit length (Ω/m) of the heating element 3 is, the smaller the diameter of a conductor 4 can be. As a result, the heating element comprises a less number of the conductors 4. An increased resistance per unit length (Ω/m) due to the smaller thickness of the heating element 3 can be offset with the two heating elements 3a and 3b connected in parallel.

### (Embodiment 9)

Fig. 16 is a plan view of a surface heating device 1b where a heating element 3 is disposed in a wave pattern in the outer region a support 2 (at both, left and right, ends of the surface heating device 1b in the drawing).

A surface heating device 1 installed in a seat 20 of a vehicle receives a load at the center and wrinkles radially about the center. It may wrinkle more deeply towards the outer region of the surface heating device 1, thus being disconnected.

The heating element 3 itself according to the embodiment is made stronger for the bending. The element, which is arranged in the wave pattern at the outer region of the surface heating device 1b, is made stronger for a bending stress thereon, because the stress is dispersed.

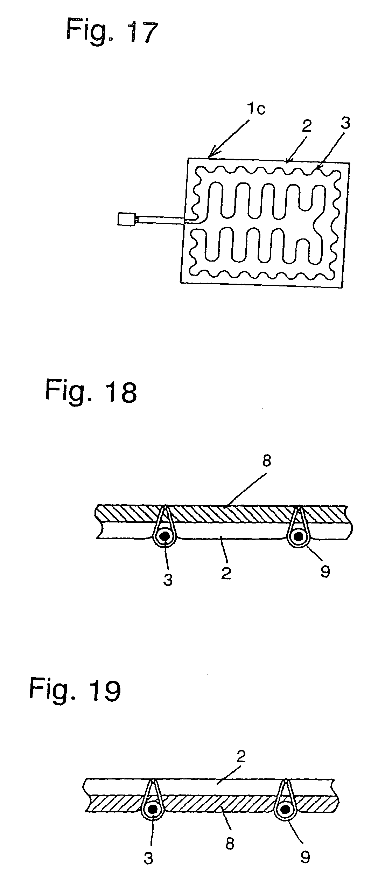

Fig. 17 is a plan view of another surface heating device 1c where the heating element 3 is disposed in the wave pattern on and along the outer region of a supporter 2. That further increases the bending strength of the device.

### (Embodiment 10)

Figs. 18 and 19 are enlarged cross sectional views of a surface heating device 1 where a heating element 3 is held by a thread 9 to a supporter 2 on which a heat leveling element 8. More specifically, Fig. 18 illustrates the heat leveling element 8 disposed on the supporter 2 opposite to the heating element 3, while Fig. 19 illustrates the heat leveling element 8 disposed on the supporter 2 to which the heating element 3 is held. The temperature of the heating element 3 having a wire shape is highest at the center and declines as departing from the center. Accordingly, the heat distribution of the surface cover 23 of the seat 20 of a vehicle largely depends upon a location of the heating element 3. The heat leveling element 8 disperses the heat generated by the heating element 3 uniformly throughout the surface cover 23 of the seat 20.

Figs. 20 and 21 are enlarged cross sectional views of another surface heating device 1 where a heating element 3 is held between a supporter 2 and a heat leveling element 8. Also, shown in Fig. 22 is the heating element 3 held between a couple of supporters 2a and 2b accompanied with the heat leveling element 8. Those provide the same effect as of the implementations shown in Figs. 18 and 19.

### (Embodiment 11)

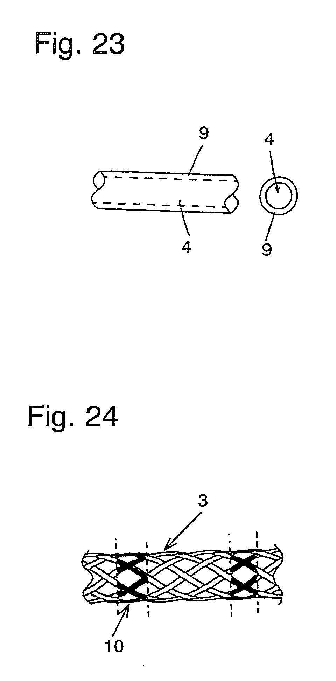

Fig. 23 is an enlarged view of a conductor 4 coated with a plated layer 9. The layer 9 protects the conductor 4 from being declined in the resistance due to water or corrosion. Also, the plated layer makes any difficult-soldering material such as steel wire be solder joinable.

The plated layer 9 covering on the heat element 3 can be mark with a color paint 10 shown in Fig. 24 for indicating the resistance per unit length (Ω/m).

### (Embodiment 12)

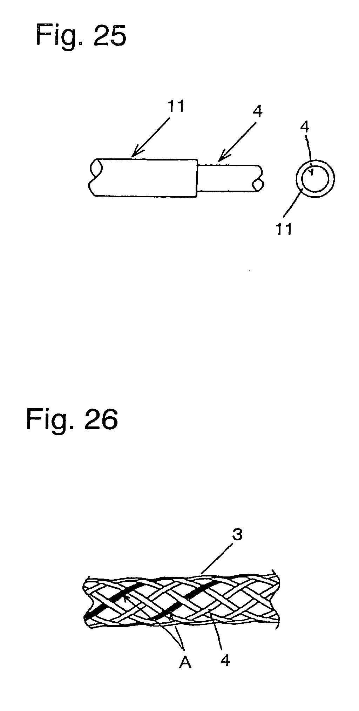

Fig. 25 is an enlarged view of a conductor 4 coated with an insulating coat 11. This inhibits the conductor 4 from declining in the resistance due to water or corrosion as the thickness becomes smaller.

The conductor 4 may be marked on the insulating coat 11 with a color paint (two lines A in the drawing) for indicating the resistance per unit length (Ω/m).

### Industrial Applicability

A surface heating device for a seat according to the present invention employs a thin heating element having a small diameter. And thus, the device is inhibited from appearing as a relief on the surface cover of the seat and from giving an uncomfortable touch when seated. The heating element can rapidly heat up the surface cover of the seat.

## Claims

1. A surface heating device comprising:
a supporter (2) being flexible; and
a heating element (3) comprising a conductor (4) and being disposed on said supporter, **characterised in that** said heating element (3) comprises:
a first heating element (3a) disposed in an outer region (6) of said supporter (2); and
a second heating element (3b) disposed on an inner region (7) of said supporter coupled in parallel with said first heating element.

2. The surface heating device according to claim 1, wherein said first heating element (3a) is disposed in a wave pattern.

3. The surface heating device according to claim 1 or 2, further comprising a heat leveling element (8) disposed on one surface of said supporter (2).

4. The surface heating device according to claim 1 or 2, further comprising a plated layer (9) covering said conductor (4).

5. The surface heating device according to claim 1 or 2, further comprising an insulating coat (11) covering said conductor (4).

6. A surface heating device comprising:
a supporter (2) being flexible; and
a heating element (3) comprising a conductor (4) and being disposed on said supporter, **characterised by** further comprising a heat leveling element (8) disposed on one surface of said supporter (2).

7. A surface heating device comprising:
a supporter (2) being flexible; and
a heating element (3) comprising a conductor (4) and being disposed on said supporter, **characterised by** further comprising a plated layer (9) covering said conductor (4).

8. A surface heating device comprising:
a supporter (2) being flexible; and
a heating element (3) comprising a conductor (4) and being disposed on said supporter, **characterised by** further comprising an insulating coat (11) covering said conductor (4).

9. A surface heating device according to any preceding claim, wherein said heating element (3) comprises a plurality of conductors being braided.

10. The surface heating device according to claim 9, wherein said conductors (4b) are of a single type.

11. A surface heating device according to claim 9, wherein said conductors (4d, 4e) are of different types from each other.

12. A surface heating device according to claim 9 further comprising a core wire (5,5a) in said heating element (3).

13. A surface heating device according to any of claims 1 to 8, said heating element comprising said conductor reinforced with a metal member fabricated by a metal fiber.

14. The surface heating device according to claim 13, wherein said conductor is a silver-contained alloy wire.

15. The surface heating device according to claim 13, wherein said conductor is one of a single wire and a stranded wire.

16. The surface heating device according to claim 13, wherein said conductor is braided.
